# EUROPÄISCHE PATENTSCHRIFT

(11) **EP 0 660 945 B1**
(45) Veröffentlichungstag und Bekanntmachung des Hinweises auf die Patenterteilung: **07.05.1997**
(21) Anmeldenummer: 93918937.9
(22) Anmeldetag: 03.09.1993
(51) Int. Cl.: G02B 21/24, G02B 7/16

(54) **Wechselvorrichtung mit zentrierbaren Aufnahmeringen für optische Bauelemente**
Turret assembly with centerable reception rings for optical elements
Tourelle d'objectifs comportant des anneaux de logement pouvant être centrés

(30) Priorität: 19.09.1992 DE 4231407
(43) Veröffentlichungstag der Anmeldung: 05.07.1995
(73) Patentinhaber: LEICA MIKROSKOPIE UND SYSTEME GmbH, D-35530 Wetzlar (DE)
(72) Erfinder: WIEBER, Karl, D-35614 Asslar (DE); SCHALZ, Karl-Josef, D-35781 Weilburg (DE)
(74) Vertreter: Stamer, Harald, Dipl.-Phys.
(86) Internationale Anmeldenummer: DE9300798
(87) Internationale Veröffentlichungsnummer: WO9407173

(56) Entgegenhaltungen:
- WO-A-81/00917
- DE-A- 1 547 374
- DE-A- 3 110 726
- US-A- 3 930 712
- US-A- 4 018 505
- US-A- 4 025 171

## Beschreibung

Die Erfindung betrifft eine Wechselvorrichtung mit mehreren in ein Gleitlager eingesetzten zentrierbaren Aufnahmeringen für optische Bauelemente.

Wechselvorrichtungen dieser Art sind z.B. Objektivrevolver an Mikroskopen. Für die Polarisationsmikroskopie ist es dabei erforderlich, daß die in eine drehbare Kalotte am Revolver eingesetzten Objektive bezüglich der optischen Achse des mikroskopischen Abbildungssystems zentriert werden können. Die Aufnahmeringe zum Einschrauben der Objektive sind dazu in ein Gleitlager in der Kalotte eingesetzt und können in diesem Gleitlager senkrecht zur optischen Achse über Stellschrauben definiert verschoben werden. Die Aufnahmen sind in dem Gleitlager gegen Verdrehung gesichert. Die Kalotte ist zweischalig ausgebildet. In axialer Richtung werden die Aufnahmeringe durch eine ringförmige Wellenfeder zwischen diesen beiden Kalottenschalen in dem Gleitlager gehalten. Die Herstellung und Montage der zweischaligen Kalottenkonstruktion sind sehr aufwendig. Die Gesamthöhe des Revolvers ist relativ hoch und die Anzahl der zentrierbaren Aufnahmeringe ist begrenzt.

Die US-A-4 018 505 offenbart eine Wechselvorrichtung, bei der die in ein Gleitlager eingesetzten zentrierbaren Aufnahmeringe für die optischen Bauelemente durch ein Federelement axial in Position gehalten werden.

Aus der DE-A-15 47 374 ist eine Wechselvorrichtung für ein Mikroskop bekannt, bei der die Aufnahmeringe in einer außerhalb der Wechselvorrichtung vorgesehenen Anschlagvorrichtung mit Hilfe einer ersten, in der Wechselvorrichtung angebrachten Blattfeder lateral zentriert und mit einer zweiten, ebenfalls außerhalb der Wechselvorrichtung am Mikroskop angebrachten Blattfeder in axialer Richtung mit Hilfe eines weiteren externen Anschlags in Position gehalten werden.

Durch Normmaße ist die maximale Höhe des Objektivrevolvers festgelegt. Es ist jedoch vorteilhaft, wenn die Höhe verringert werden kann, da dann die Austrittsöffnungen der Objektive näher an die nachfolgende Abbildungsoptik herangebracht werden können. Die Durchmesser der Abbildungsstrahlenbündel sind dann kleiner, sodaß die weitere Abbildungsoptik kostengünstiger gestaltet werden kann.

Die Drehachse der Kalotte des Objektivrevolvers ist gegenüber der optischen Achse des Mikroskops geneigt. Ein großer Neigungswinkel hat den Vorteil, daß die einzelnen Objektive sehr schnell aus dem Arbeitsbereich ausschwenken, wenn die Kalotte gedreht wird. Unter Beachtung der vorgegebenen maximalen Höhe des Objektivrevolvers verkleinert ein großer Neigungswinkel den zulässigen Durchmesser der Kalotte. Auf der Kalotte kann daher nur eine kleine Anzahl von Objektiven angeordnet werden.

Eine Vergrößerung des Durchmessers der Kalotte kann unter den vorgenannten Bedingungen nur erreicht werden, wenn die Tiefe der Kalotte verringert und im übrigen die zulässige maximale Höhe des Objektivrevolvers ausgenutzt wird. Eine flachere Kalotte hat jedoch den Nachteil, daß im Innern des Revolvers zwischen dem festen und dem rotierenden Teil wenig Platz zur Verfügung steht, so daß die Anordnung zentrierbarer Aufnahmeringe erheblich erschwert wird.

Der Erfindung lag daher die Aufgabe zugrunde, die Gesamthöhe des Objektivrevolvers zu reduzieren, die Anzahl der zentrierbaren Aufnahmeringe zu erhöhen und die Konstruktion wesentlich zu vereinfachen.

Diese Aufgabe wird erfindungsgemäß durch die im Anspruch 1 angegebenen Merkmale gelöst. Vorteilhafte Ausgestaltungen der Erfindung ergeben sich aus den Merkmalen der Unteransprüche.

Die Erfindung ist in der Zeichnung schematisch dargestellt und wird nachfolgend anhand eines Ausführungsbeispiels näher beschrieben. Im einzelnen zeigen:
- Fig. 1:: einen Schnitt durch einen Objektivrevolver
- Fig. 2:: eine Aufsicht auf die Kalotte mit sternförmigem Federelement

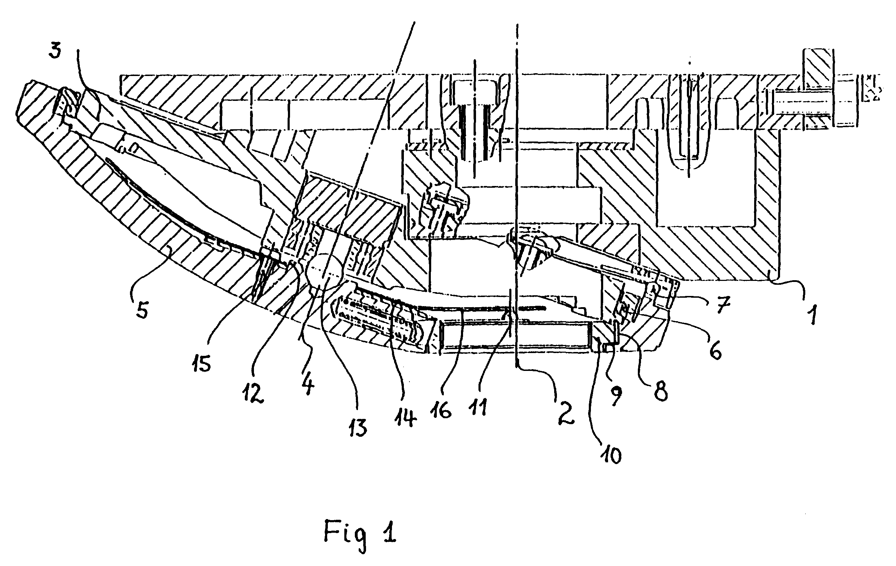

Die Figur 1 zeigt einen Objektivrevolver 1, der auswechselbar in das Stativ eines nicht mit dargestellten Mikroskops eingesetzt werden kann, so daß seine senkrechte Achse 2 mit der optischen Achse des nachfolgenden mikroskopischen Abbildungssystems übereinstimmt. An dem Objektivrevolver 1 ist eine schrägstehende Fläche 3 mit einer Drehachse 4 angeformt. Auf diese Fläche 3 ist eine Kalotte 5 aufgesetzt, die in einem ringförmigen Kugellager 6 um die Drehachse 4 drehbar ist. Über Rastmittel 7 ist die Kalotte 5 in mehrere definierte Arbeitsstellungen zu bringen.

In der Kalotte 5 sind stufenförmig abgesetzte kreisförmige Öffnungen 8 vorgesehen. Die Stufe bildet ein Gleitlager 9. Auf diesem Gleitlager 9 aufliegend sind in die Kalotte 5 Aufnahmeringe 10 eingesetzt, die einen kleineren Außendurchmesser aufweisen als die Öffnungen 8. Die Aufnahmeringe 10 sind daher senkrecht zur Achse 2 in dem Gleitlager 9 verschiebbar. In den oberen Rand des Aufnahmeringes 10 sind zwei Kugeln 11 eingelegt.

Die Kalotte 5 weist noch eine zentrale Achse 12 mit einer zentrierenden Kugel 13 auf der Drehachse 4 auf. Auf die Achse 12 ist ein Federelement mit seinem zentralen Teil 14 aufgesetzt und über Schrauben 15 mit der Kalotte 5 fest verbunden. Das Federelement weist Zungen 16 auf, die auf den Kugeln 11 unter Federdruck aufliegen und die Aufnahmeringe 10 sicher in dem Gleitlager 9 halten, wobei die Querverschiebbarkeit nicht behindert wird.

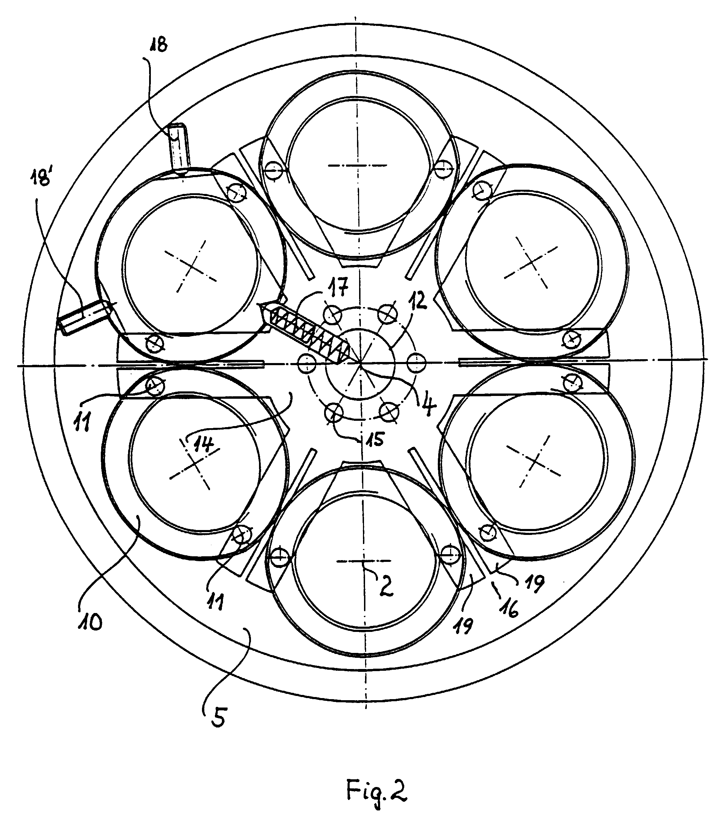

Figur 2 zeigt in der Aufsicht die in die Kalotte 5 eingesetzten Aufnahmeringe 10 mit den in ihren oberen Rand eingelegten Kugeln 11. Die Aufnahmeringe 10 sind über einen Federbolzen 17 und Stellschrauben 18,18' in dem Gleitlager 9 definiert verstellbar und gleichzeitig gegen Verdrehung gesichert, wenn in die Aufnahmeringe 10 nicht mit dargestellte Objektive eingesetzt werden. Die Stellmittel sind nur an einem Aufnahmering 10 beispielhaft dargestellt.

Der zentrale Teil 14 des Federelementes ist symmetrisch zur Drehachse 4 über Schrauben 15 mit der Kalotte 5 fest verbunden. Von diesem zentralen Teil 14 gehen sternförmig Zungen 16 aus, die in Längsrichtung zweigeteilt sind und auf diese Weise jeweils unabhängige Federlappen 19 bilden. Aufeinanderfolgende Hälften 19 von benachbarten Zungen 16 drücken auf die Kugeln 11. Der freie Durchmesser der Aufnahmeringe 10 wird durch die Federlappen 19 nicht eingeschränkt. Es ist zu berücksichtigen, daß der für den Strahlendurchtritt benötigte Flächenteil wegen der Fassungsteile der Objektive ohnehin kleiner als der Ringdurchmesser ist.

Durch den Einsatz des sternförmigen Federelementes 14,16,19 kann die Kalotte 5 sehr flach gestaltet werden. Es sind keine zusätzlichen Gegenlager zum Halten der Aufnahmeringe 10 erforderlich. Die Kalotte 5 wird damit ein wesentlich einfacher zu fertigendes Bauteil. Die flache Bauhöhe der Kalotte 5 gibt mehr Freiheit, den Abstand in Richtung der Drehachse 4 zu vergrößern, ohne die zulässige Gesamtbauhöhe des Objektivrevolvers zu überschreiten. Kleine Änderungen im Neigungswinkel der Drehachse 4 haben bereits einen größeren Einfluß auf den zulässigen Durchmesser der Kalotte 5. Damit kann der Durchmesser der Kalotte 5 vergrößert werden und es können auf ihr mehr Aufnahmeringe 10 angeordnet werden. Im Ausführungsbeispiel sind sechs Aufnahmeringe 10 dargestellt. Bekannte Anordnungen weisen im allgemeinen nur vier Aufnahmeringe auf. Der Neigungswinkel der Drehachse 4 kann noch relativ groß gewählt werden, so daß ein schnelles Ausschwenken der Objektive gewährleistet ist.

Anstelle des sternförmig ausgebildeten Federelementes kann dieses auch linear gestaltet sein, so daß diese Art der Halterung von Aufnahmeringen mit Vorteil auch bei einem in der Bauhöhe begrenzten Wechselschlitten mit zentrierbar eingesetzten doppelbrechenden Prismen, Polarisationsfiltern, Markenträgern usw. verwendet werden kann.

## Patentansprüche

1. Wechselvorrichtung mit einer Kalotte (5) und mit mehreren jeweils in ein in der Kalotte (5) ausgebildetes Gleitlager (9) eingesetzten zentrierbaren, durch ein Federelement gehaltenen Aufnahmeringen (10) zur Aufnahme optischer Bauelemente, **dadurch gekennzeichnet,** daß das Federelement mehrere in Längsrichtung zweigeteilte Zungen (16) aufweist und an der Kalotte (5) derart befestigt ist, daß die beiden Hälften (19) einer jeden Zunge (16) jeweils am Rand von benachbarten Aufnahmeringen (10) unter Federdruck aufliegen.

2. Wechselvorrichtung nach Anspruch 1, **dadurch gekennzeichnet,** daß in den Rand der Aufnahmeringe (10) Kugeln (11) eingelegt sind, auf denen die Zungen (16) des Federelementes aufliegen.

3. Wechselvorrichtung nach einem der vorhergehenden Ansprüche, **dadurch gekennzeichnet,** daß die Wechselvorrichtung Teil eines Objektivrevolvers (1) für Polarisationsmikroskope ist, das Federelement sternförmig ausgebildet ist, mit seinem Zentrum (14) auf die Drehachse (12) der die Aufnahmeringe (10) tragenden Kalotte (5) des Objektivrevolvers (1) aufgesetzt und mit der Kalotte (5) starr verbunden ist.

## Claims

1. Changing device with a skirt (5) and with several centrable receptacle rings (10), which are inserted into a slide bearing (9) formed in the skirt (5) and which are retained by a spring element, for the reception of optical components, characterised thereby, that the spring element comprises several tongues (16), which are divided in two in longitudinal direction and fastened at the skirt (5) in such a manner that both the halves (19) of each tongue (16) each lie under spring pressure against the rim of neighbouring receptacle rings (10).

2. Changing device according to claim 1, characterised thereby, that balls (11), in which the tongues (16) of the spring element rest, are laid into the rim of the receptacle rings (10).

3. Changing device according to one of the preceding claims, characterised thereby, that the changing device is part of a lens turret (1) for polarising microscopes and the spring element is formed in star shape, is placed by its centre (14) onto the rotational axle (12) of the skirt (5), which carries the receptacle rings (10), of the lens turret (1) and is rigidly connected with the skirt (5).

## Revendications

1. Dispositif de changement avec une calotte (5) et avec plusieurs anneaux de logement (10) disposés centrables dans un palier à glissement (9) et maintenus par un élément à ressort pour le logement d'éléments optiques, caractérisé en ce que l'élément à ressort présente plusieurs langues divisées en deux en direction longitudinale (16) et est fixé à la calotte (5) de façon que les deux moitiés (19) de l'une de chaque langue (16) repose à chaque fois sur le bord d'anneaux voisins de logement (10) sous la pression d'un ressort.

2. Dispositif de changement selon la revendication 1, caractérisé en ce que dans le bord des anneaux de logement (10) sont logées des billes (11) sur lesquelles reposent les langues (16) de l'élément à ressort.

3. Dispositif de changement selon l'une des revendications précédentes, caractérisé en ce que le dispositif de changement fait partie d'un revolver à objectifs (1) pour un microscope à polarisation, l'élément à ressort est de configuration en étoile avec son centre (14) placé sur l'axe de rotation (12) de la calotte (5) portant les anneaux de logement (10) du révolver à objectifs (1) et est rigidement relié à la calotte (5).
